# EUROPÄISCHE PATENTSCHRIFT

(11) **EP 1 913 279 B1**
(45) Veröffentlichungstag und Bekanntmachung des Hinweises auf die Patenterteilung: **26.08.2009**
(21) Anmeldenummer: 06777329.1
(22) Anmeldetag: 14.06.2006
(51) Int. Cl.: F16D 65/14

(54) **SELBSTVERSTÄRKENDE ELEKTROMECHANISCHE SCHEIBENBREMSE**
SELF-ENERGISING ELECTROMECHANICAL DISC BRAKE
FREIN À DISQUE DISQUE ELECTROMECANIQUE AUTORENFORÇATEUR

(30) Priorität: 29.07.2005 DE 102005035608
(43) Veröffentlichungstag der Anmeldung: 23.04.2008
(73) Patentinhaber: ROBERT BOSCH GMBH, 70442 Stuttgart (DE)
(72) Erfinder: CAO, Chi-Thuan, 70825 Korntal-Muenchingen (DE); BAUMANN, Dietmar, 71282 Hemmingen (DE); HOFMANN, Dirk, 70439 Stuttgart (DE); VOLLERT, Herbert, 71665 Vaihingen/Enz (DE); NAGEL, Willi, 71686 Remseck/Hochdorf (DE); HENKE, Andreas, 34474 Diemelstadt (DE); FOITZIK, Bertram, 71636 Ludwigsburg (DE); GOETZELMANN, Bernd, 71063 Sindelfingen (DE); FRICK, Hans, 87487 Wiggensbach (DE)
(86) Internationale Anmeldenummer: PCT/EP2006/063200
(87) Internationale Veröffentlichungsnummer: WO 2007/012523

(56) Entgegenhaltungen:
- WO-A-20/05015046
- DE-A1- 4 236 683
- DE-A1- 10 226 035
- US-A1- 2004 245 056
- US-A1- 2004 262 098

## Beschreibung

### Stand der Technik

Die Erfindung betrifft eine selbstverstärkende elektromechanische Scheibenbremse gemäß dem Oberbegriff des Anspruch 1. So eine Bremse geht zum Beispiel aus WO-A-2005/015046 hervor.

Elektromechanische Scheibenbremsen sind an sich bekannt. Sie weisen eine elektromechanische Betätigungseinrichtung auf, mit der zur Betätigung der Scheibenbremse, also zum Bremsen, ein Reibbremsbelag gegen eine Bremsscheibe drückbar ist. Die elektromechanische Betätigungseinrichtung weist üblicherweise einen Elektromotor auf, mit dem über ein Rotations-/Translations-Umsetzungsgetriebe, beispielsweise einen Gewindetrieb, der Reibbremsbelag gegen die Bremsscheibe drückbar ist. Vielfach ist dem Elektromotor und dem Rotations-/Translations-Umsetzungsgetriebe ein Untersetzungsgetriebe zwischengeschaltet. Es bestehen auch andere Möglichkeiten eines Rotations-/Translations-Umsetzungsgetriebes, beispielsweise kann mittels des Elektromotors, vorzugsweise ein Untersetzungsgetriebe, ein Nocken geschwenkt werden, der den Reibbremsbelag gegen die Bremsscheibe drückt oder es findet ein Zahnstangengetriebe Verwendung, bei dem ein Zahnrad eine Zahnstange bewegt, die den Reibbremsbelag verschiebt. Die Zahnstange muss nicht gerade sein.

Zur Erzielung einer Selbstverstärkung sind Rampenmechanismen bekannt mit einer Rampe oder einem Satz Rampen, die eine Steigung in Bezug auf die Bremsscheibe aufweisen, d. h. ein Abstand zwischen der oder den Rampen und der Bremsscheibe verkleinert sich in einer tangentialen- oder Umfangsrichtung der Bremsscheibe. Die Rampen können beispielsweise einen schraubenlinienförmigen Verlauf aufweisen. Die Steigung der Rampe oder Rampen kann sich im Verlauf der Rampe oder Rampen ändern, damit sich die Höhe der Selbstverstärkung bei Betätigung der Scheibenbremse ändert. So können die Rampe oder Rampen zu Beginn eine große Steigung aufweisen, um ein Lüftspiel zwischen dem Reibbremsbelag und der Bremsscheibe zu Beginn der Betätigung schnell zu überwinden und an ihrem Ende können die Rampe oder Rampen eine kleine Steigung aufweisen, um bei hoher Betätigung- und Bremskraft eine hohe Selbstverstärkung zu erzielen. Weisen die Rampe oder Rampen eine konstante Steigung über ihre Länge auf, spricht man auch von einem Keil oder Keilen und von einem Keilmechanismus. Die Rampe oder Rampen können am Bremssattel und/oder am Reibbremsbelag, dort vorzugsweise an dessen der Bremsscheibe abgewandter Rückseite, angeordnet sein.

Der Reibbremsbelag stützt sich über die Rampe oder Rampen an einem Bremssattel der Scheibenbremse ab. Zur Betätigung der Scheibenbremse wird der Reibbremsbelag mit der elektromechanischen Betätigungseinrichtung entlang der Rampe oder Rampen verschoben, bis er an der Bremsscheibe anliegt und gegen die Bremsscheibe drückt. Die drehende Bremsscheibe übt eine Reibungskraft auf den Reibbremsbelag aus, die diesen in Richtung der ansteigenden Rampe oder Rampen beaufschlagt. Die Abstützung des Reibbremsbelags an der oder den Rampen bewirkt nach dem Keilprinzip eine Normalkraft zu den Rampen auf den Reibbremsbelag, die eine Normalkraftkomponente zur Bremsscheibe auf den Reibbremsbelag ausübt und den Reibbremsbelag zusätzlich zu einer von der Betätigungseinrichtung bewirkten Andruckkraft gegen die Bremsscheibe drückt. Die Andruck- und Bremskraft der Scheibenbremse wird dadurch verstärkt.

Die bekannten Scheibenbremsen weisen einen Bremssattel auf, an oder in dem die elektromechanischen Teile der Scheibenbremse untergebracht sind, wobei unter elektromechanischen Teilen sowohl die Bauteile der Betätigungseinrichtung als auch der Selbstverstärkungseinrichtung zu verstehen sind.

Der Bremssattel elektromechanischer Scheibenbremsen ist üblicherweise, allerdings nicht zwingend, als Schwimmsattel ausgebildet, d. h. er ist quer zur Bremsscheibe verschieblich. Beim Andrücken des einen Reibbremsbelags gegen die eine Seite der Bremsscheibe verschiebt sich der Bremssattel quer zur Bremsscheibe und drückt einen anderen Reibbremsbelag gegen die andere Seite der Bremsscheibe, so dass zum Andrücken beider Reibbremsbeläge nur eine Betätigungseinrichtung und eine Selbstverstärkungseinrichtung erforderlich sind. Die Betätigungseinrichtung und die Selbstverstärkungseinrichtung müssen nicht auf der gleichen Seite der Bremsscheibe angeordnet sein.

### Erläuterung und Vorteile der Erfindung

Die erfindungsgemäße selbstverstärkende elektromechanische Scheibenbremse mit den Merkmalen des Anspruchs 1 weist einen Bremssattel und ein Gehäuse auf, in dem elektromechanische Teile der Scheibenbremse untergebracht sind. Das Gehäuse ist einstückig mit dem Bremssattel oder bei einem mehrteiligen Bremssattel einstückig mit einem Teil des Bremssattels. Das Gehäuse der erfindungsgemäßen Scheibenbremse bildet einen formstabilen Hohlkörper, der den Bremssattel gegen Biegung und/oder Torsion versteift. Der Erfindung liegt somit die Idee zu Grunde, den Bremssattel zugleich auch als Gehäuse für elektromechanische Teile der Scheibenbremse auszubilden, wodurch der Bremssattel eine räumliche Form erhält und dadurch auch bei geringer Wanddicke durch seine Formgebung stabil, insbesondere biegesteif und verwindungssteif ist. Vergleichbar ist die formstabile Ausbildung des Bremssattels bzw. Gehäuses mit einer selbsttragenden Autokarosserie, die, obwohl sie aus dünnen Blechen mit vernachlässigbarer Biege- und Verwindungssteifigkeit, die sich unter ihrem Eigengewicht biegen, hergestellt ist, eine hohe Biege- und Verwindungssteifigkeit und Formstabilität aufweist. Die Erfindung ermöglicht eine Leichtbauweise des Bremssattels bei gleichzeitig hoher Steifigkeit. Fügebedingte Toleranzen werden vermieden oder ebenso wie Toleranzketten verringert. Ebenfalls verringert sich der Montageaufwand.

Die Unteransprüche haben vorteilhafte Ausgestaltungen und Weiterbildungen der im Anspruch 1 angegebenen Erfindung zum Gegenstand.

Anspruch 2 sieht vor, dass die Scheibenbremse eine Selbstverstärkungseinrichtung mit einem Rampenmechanismus aufweist. Dabei ist mindestens eine Rampe des Rampenmechanismus einstückig mit dem Gehäuse und bildet eine Versteifungsrippe des Gehäuses. Das Gehäuse und der Bremssattel werden zusätzlich versteift durch die Rampe oder Rampen des Rampenmechanismus, die für die Selbstverstärkung notwendig sind. Diese Ausgestaltung der Erfindung trägt weiter zur Versteifung des Bremssattels durch Formgebung seines Gehäuses bei.

Anspruch 3 sieht vor, dass mindestens eine Rampe des Rampenmechanismus einen Lagerbock für eine Getriebewelle eines Getriebes der Betätigungseinrichtung der Scheibenbremse bildet. Dadurch werden zwei Funktionen in einem Bauteil vereint.

Anspruch 4 setzt den Grundgedanken der Erfindung eines durch Formgebung steifen Bremssattels fort, indem eine oder mehrere Rampen und/oder ein Lagerbock gemeinsam eine Versteifungsrippe des Gehäuses bilden, die das Gehäuse beispielsweise in Längsrichtung durchzieht. Dadurch wird eine hohe Biegesteifigkeit in Längsrichtung des Gehäuses, d. h. in Umfangs- bzw. Sekantenrichtung zur Bremsscheibe und damit in einer Richtung erzielt, die beim Betätigen der Scheibenbremse üblicherweise hohen Biegespannungen ausgesetzt ist.

Gemäß Anspruch 5 sind die Versteifungsrippen des Gehäuses auf Stoß zueinander und/oder zu Gehäusewänden angeordnet. Dafür kommen beispielsweise T-oder Kreuzstöße in Betracht, die Stöße müssen nicht rechtwinklig sein. Das Gehäuse lässt sich dadurch im Querschnitt gesehen nach Art eines Doppel-T-Trägers und dadurch sehr formstabil und steif ausführen.

Allgemein ausgedrückt bezweckt die Erfindung eine Verrippung des Gehäuses bzw. des Bremssattels, um eine große Formstabilität und Steifigkeit bei geringer Wandstärke, geringem Materialeinsatz und geringem Gewicht zu erzielen, wobei insbesondere ohnehin notwendige Elemente wie die Rampen des Rampenmechanismus der Selbstverstärkungseinrichtung als Versteifungsrippen genutzt werden.

Anspruch 6 sieht vor, dass das Gehäuse ein Urformteil ist, es ist beispielsweise durch Gießen, Sintern oder Schmieden hergestellt. Dadurch ist eine einfache und preisgünstige Herstellung des Gehäuses und damit des Bremssattels der erfindungsgemäßen Scheibenbremse möglich bei zugleich hoher Formgebungsfreiheit.

### Zeichnung

Die Erfindung wird nachfolgend anhand eines in der Zeichnung dargestellten Ausführungsbeispiels näher erläutert. Es zeigen:
- Figur 1: eine erfindungsgemäße selbstverstärkende elektromechanische Scheibenbremse mit Blickrichtung radial von außen zu einer Bremsscheibe;
- Figur 2: einen Bremssattel der Scheibenbremse gemäß Pfeil II in Figur 1;
- Figur 3: einen Querschnitt einer Rampe der Scheibenbremse aus Figur 1;
- Figur 4: eine abgewandelte Ausführungsform der Rampe aus Figur 3;
- Figur 5: einen Querschnitt einer Zahnstange der Scheibenbremse aus Figur 1; und
- Figur 6: eine vergrößerte Darstellung der Einzelheit VI in Figur 1.

### Beschreibung des Ausführungsbeispiels

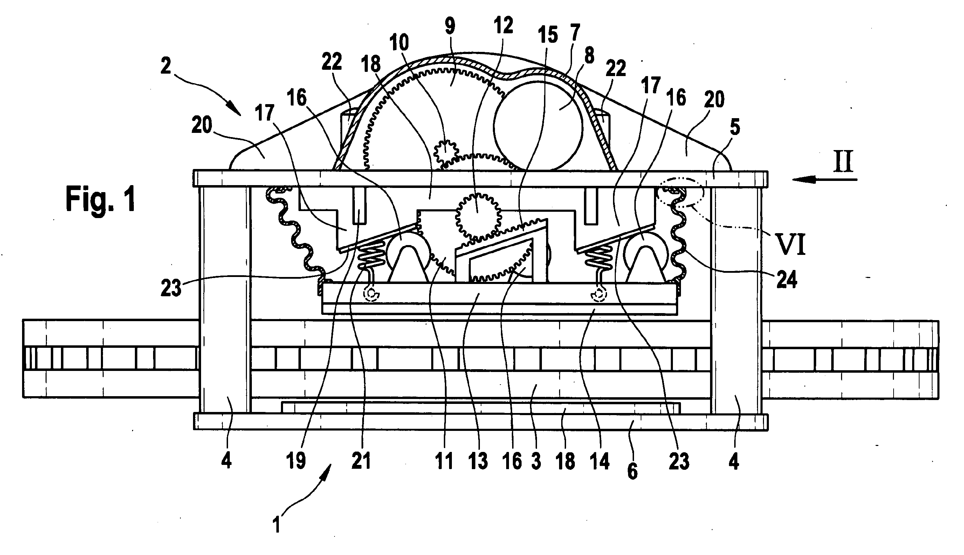

Die in Figur 1 dargestellte erfindungsgemäße selbstverstärkende elektromechanische Scheibenbremse 1 weist einen Bremssattel 2 auf, der als Schwimmsattel ausgebildet ist, d. h. er ist quer zu einer Bremsscheibe 3 verschieblich geführt. Eine Schiebeführung des Bremssattels 2 ist in der Zeichnung von Stegen 4 des Bremssattels 2 verdeckt und nicht sichtbar. Solche Schiebeführungen sind an sich bekannt und brauchen deswegen hier nicht näher erläutert zu werden.

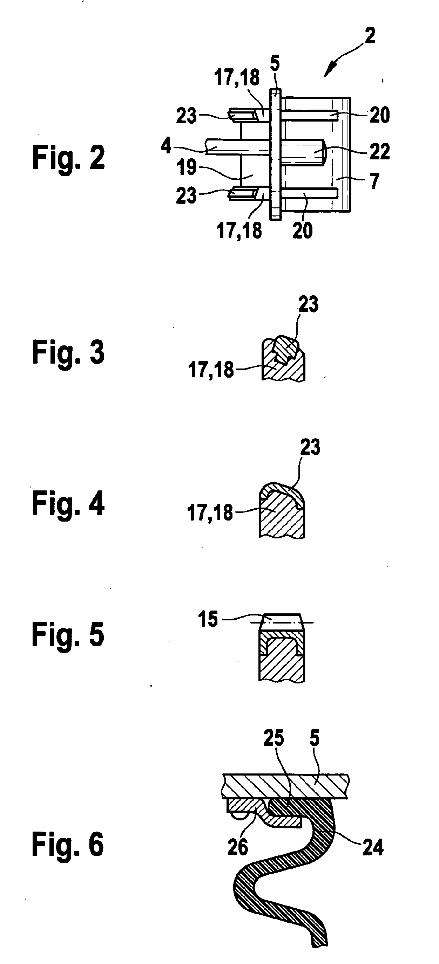

Der Bremssattel 2 weist zwei mit Abstand voneinander und parallel zueinander angeordnete Platten 5, 6 auf, die sich beiderseits der Bremsscheibe 3 befinden und parallel zur Bremsscheibe 3 angeordnet sind. Die beiden Platten 5, 6 sind an ihren Längsenden durch die Stege 4 einstückig miteinander verbunden. Die Stege 4 verlaufen quer zur Bremsscheibe 3 und sind außerhalb eines Umfangs der Bremsscheibe 3 angeordnet. Die Stege 4 befinden sich in etwa in den Längsmitten der Platten 5, 6 (vgl. Figur 2), wodurch sie bei Betätigung der Scheibenbremse 2 im Wesentlichen nur auf Zug und allenfalls gering auf Biegung beansprucht werden und die Platten 5, 6 parallel zueinander bleiben und nicht durch eine Betätigungs- oder Zuspannkraft der Scheibenbremse 1 schräg auseinander gedrückt werden. Mit den beiderseits der Bremsscheibe 3 angeordneten Platten 5, 6, die durch die Stege 4 miteinander verbunden sind, bildet der Bremssattel 2 einen sogenannten Rahmensattel.

Eine der beiden Platten 5 des Bremssattels 2 weist ein Gehäuse 7 auf, das einen dreidimensionalen, aus der Ebene der Platte 5 vorstehenden und durch seine Formgebung formstabilen Hohlkörper bildet (siehe auch Figur 2). Das Gehäuse 7 ist einstückig mit der Platte 5, d. h. das Gehäuse 7 ist einstückiger Bestandteil des Bremssattels 2. Der Bremssattel 2 mit den beiden Platten 5, 6, den die Platten 5, 6 verbindenden Stegen 4 und dem Gehäuse 7 ist in einem Stück als Urformteil beispielsweise durch Metalldruckguss hergestellt. Das Gehäuse 7 versteift die Platte 5, insbesondere ist die Platte 5 durch das Gehäuse 7 auch bei geringer Wandstärke und Plattendicke biege- und verwindungssteif.

Im Gehäuse 7 ist ein Elektromotor 8 angeordnet, mit dem ein großes Zahnrad 9 antreibbar ist. Ein Antriebsritzel des Elektromotors 8 befindet sich auf einer dem Betrachter abgewandten Stirnseite des Elektromotors 8 und ist deswegen in der Zeichnung nicht sichtbar. Das große Zahnrad 9 ist über eine Welle drehfest mit einem Ritzel 10, das mit einem mittleren Zahnrad 11 kämmt, welches über eine Welle drehfest mit einem kleinen Zahnrad 12 ist. Der Elektromotor 8, das Ritzel 10 und das große Zahnrad 9 zum großen Teil befinden sich auf einer der Bremsscheibe 3 abgewandten Außenseite der Platte 5 des Bremssattels 2, sie sind im Gehäuse 7 untergebracht. Das kleine Zahnrad 12 und das mittlere Zahnrad 11 zum großen Teil befinden sich auf einer der Bremsscheibe 3 zugewandten Innenseite der Platte 5. Das große Zahnrad 9 und das mittlere Zahnrad 11 durchdringen die Platte 5 durch in der Zeichnung nicht sichtbare Schlitze. Der Elektromotor 8, das große Zahnrad 9 und das Ritzel 10 sind elektromechanische Teile der Scheibenbremse 1, die in dem Gehäuse 7 untergebracht sind, das deswegen auch als Motor- und Getriebegehäuse bezeichnet werden kann.

In Figur 2 ist der Bremssattel 2 in einer Stirnansicht gemäß Pfeil II in Figur 1 dargestellt. Der Bremssattel 2 ist an den Stegen 4 abgebrochen gezeichnet, die Platte 6 ist nicht dargestellt. In Figur 2 ist ausschließlich der Bremssattel 2 ohne Einbauteile, also ohne die elektromechanischen Teile 6 bis 8, dargestellt. Sichtbar sind die Platte 5 mit dem Gehäuse 7 und noch zu erläuternde Rampen 17.

Auf einer der Bremsscheibe 3 zugewandten Innenseite der Platte 5 des Bremssattels 2 ist eine Belagträgerplatte 13 mit einem Reibbremsbelag 14 nahe der Bremsscheibe 3 und mit Abstand von der Platte 5 angeordnet. Die Belagträgerplatte 13 mit dem Reibbremsbelag 14 ist beweglich gegenüber der Platte 5 und dem Bremssattel 2. Die Belagträgerplatte 13 weist eine Zahnstange 15 auf ihrer der Bremsscheibe 3 abgewandten Rückseite auf, mit der das kleine Zahnrad 12 kämmt. Die Zahnstange 15 verläuft schräg in einem Winkel zur Bremsscheibe 3 und außerdem kreisbogenförmig um eine Drehachse der Bremsscheibe 3, d. h. der Verlauf der Zahnstange 15 ist schraubenlinienförmig.

Die Belagträgerplatte 13 stützt sich über drei Wälzkörper 16 (Rollen), die auf ihrer Rückseite angeordnet und drehbar gelagert sind, an Rampen 17, die auch als Keile bezeichnet werden können, ab, die auf der der Bremsscheibe 3 zugewandten Innenseite der Platte 5 des Bremssattels 2 angeordnet sind. Die Rampen 17 verlaufen mit gleicher Steigung wie die Zahnstange 15 schraubenlinienförmig, d. h. in einem Winkel zur Bremsscheibe 3 um eine Drehachse der Bremsscheibe 3. Die Wälzkörper 16 sind an Ecken eines gedachten Dreiecks mit einer langen Grundseite angeordnet, es befinden sich zwei Wälzkörper 16 und zwei Rampen 17 bezüglich der Bremsscheibe 3 radial weiter außen als der dritte oder mittlere Wälzkörper 13 und die zugehörige Rampe (vgl. Figur 2) als der dritte Wälzkörper 16 mit der zugehörigen Rampe, der/die sich in Umfangsrichtung der Bremsscheibe 3, d. h. in Längsrichtung der Platte 5 des Bremssattels 2 zwischen den beiden anderen Wälzkörpern 16 und den beiden anderen Rampen 17 befindet. Dadurch ergibt sich eine statisch bestimmte Dreipunktabstützung der Belagträgerplatte 13 im Bremssattel 2. Wie in Figur 2 zu sehen, weisen die Rampen 17 eine Querneigung auf, wobei die Querneigung der mittleren, radial weiter innen befindlichen Rampe 17 nach außen und damit der Querneigung der radial äußeren Rampen 17, die nach innen geneigt sind, entgegengerichtet ist. Dadurch wird eine Längsführung der Belagträgerplatte 13 erreicht. Grundsätzlich kann auch umgekehrt die mittlere Rampe 17 in Bezug auf die Bremsscheibe 3 radial weiter außen als die beiden anderen Rampen 17 angeordnet und/oder die Quemeigungen der Rampen 17 umgekehrt sein (nicht dargestellt).

Die Betätigung der Scheibenbremse 2 erfolgt mittels des Elektromotors 8, der über die Zahnräder 9, 11, 12 und das Ritzel 10, die ein Untersetzungsgetriebe bilden, die Zahnstange 15 und damit die Belagträgerplatte 13 in Umfangsrichtung oder genauer gesagt auf einer schraubenlinienförmigen Bahn zur Bremsscheibe 3 bewegt. Dabei wälzen die Wälzkörper 16 der Belagträgerplatte 13 auf den Rampen 17.des Bremssattels 2. Der Reibbremsbelag 14 wird gegen die Bremsscheibe 3 gedrückt und verschiebt den als Schwimmsattel ausgebildeten Bremssattel 2 quer zur Bremsscheibe 3, so dass auch ein zweiter, fest auf einer der Bremsscheibe 3 zugewandten Innenseite der anderen Platte 6 des Bremssattels 2 angeordneter Reibbremsbelag 18 gegen die andere Seite der Bremsscheibe 3 gedrückt wird. Die Bremsscheibe 3 wird gebremst. Die drehende Bremsscheibe 3 übt eine Reibungskraft in Umfangsrichtung auf die gegen sie gedrückten Reibbremsbeläge 14, 18 aus, die die Belagträgerplatte 13 in ihrer Verschieberichtung beaufschlagt. Die Abstützung der Belagträgerplatte 13 durch die Wälzkörper 16 an den Rampen 17 des Bremssattels 2 bewirkt auf Grund des zur Bremsscheibe 3 schrägen Verlaufs der Rampen 17 gemäß dem sog. Keilprinzip eine Normalkraft zu den Rampen 17, die auf die Wälzkörper 16 einwirkt. Diese Normalkraft zu den Rampen 17 weist eine Komponente quer zur Bremsscheibe 3 auf, die die Belagträgerplatte 13 mit dem Reibbremsbelag 14 zusätzlich zu der vom Elektromotor 8 erzeugten Andruckkraft gegen die Bremsscheibe 3 drückt. Die Bremskraft wird dadurch erhöht. Die Wälzkörper 16 und die Rampen 17 bilden eine Selbstverstärkungseinrichtung der Scheibenbremse 2. Die Zahnräder 9, 11, 12 und das Ritzel 10 bilden ein Untersetzungsgetriebe, das gemeinsam mit dem Elektromotor 8 und der Zahnstange 15 eine elektromechanische Betätigungseinrichtung der Scheibenbremse 2 bildet. Die genannten Bauteile bilden elektromechanische Teile 8 bis 12 der Scheibenbremse 2, die zum Teil im Gehäuse 7 des Bremssattels 2 untergebracht sind.

Die beiden äußeren Rampen 17 sind zu einer Versteifungsrippe 18 des Bremssattels 2 miteinander verbunden. Die Rampen 17 und damit die Versteifungsrippe 18 verlaufen zylinderförmig um die Drehachse der Bremsscheibe 3, ein mittlerer Bereich der Versteifungsrippe 18 bildet einen Lagerbock, in dem die Welle des mittleren und des kleinen Zahnrads 11, 12 drehbar gelagert ist. Die Versteifungsrippe 18 ist einstückig mit der Platte 5 des Bremssattels 2, sie steht von der anderen, nämlich der der Bremsscheibe 3 zugewandten Innenseite wie das Gehäuse 7 von der Platte 5 ab und ist ebenso wie das Gehäuse 7 in einem Stück mit dem Bremssattel 2 durch Urformen, beispielsweise durch Metalldruckguss, hergestellt. Die Versteifungsrippe 18 erstreckt sich in Umfangsrichtung der Bremsscheibe 3 und in Längsrichtung der Platte 5 des Bremssattels 2, sie versteift die Platte 5 insbesondere gegen Biegung. Die Versteifungsrippe 18 vereinigt mehrere Funktionen in sich, außer ihrer Funktion der Versteifung des Bremssattels 2 bildet sie den Lagerbock für die Welle des kleinen und des mittleren Zahnrads 11, 12 und die Rampen 17 zur Abstützung der Belagträgerplatte 13. Die innere oder mittlere Rampe 17 bildet ebenfalls eine mit dem Bremssattel 2 einstückige Versteifungsrippe und einen Lagerbock, in dem die Welle des mittleren und des kleinen Zahnrads 11, 12 an einer zweiten Stelle drehbar gelagert ist. Auch diese Versteifungsrippe 17 vereinigt mehrere Funktionen in sich. Zur weiteren Versteifung des Bremssattels 2 weist dieser Querrippen 19 zu den Versteifungsrippen 18 und Längsrippen 20 auf einer Außenseite des Gehäuses 7 und der Außenseite der Platte 5 auf. Der Bremssattel 2 weist durch seine Verrippung und das einen Hohlkörper bildende Gehäuse 7 eine hohe Biege- und Torsionssteifigkeit auf. Wie in Figur 2 gut zu erkennen, sind die Versteifungsrippen 18 und die Längsrippen 20 auf Stoß zur Platte 5 und zu Wänden des Gehäuses 7 angeordnet. Der Bremssattel 2 erhält dadurch eine Form in Art eines Doppel-T-Trägers, d. h. eine biege- und verwindungssteife Form.

Rückholfedern 21 halten die Belagträgerplatte 13 am Bremssattel 2. Im Ausführungsbeispiel sind Schraubenzugfedern als Rückholfedern 21 verwendet, die an der Belagträgerplatte 13 und in Domen 22 des Bremssattels 2 befestigt sind. Die Dome 22 sind einstückig mit dem Bremssattel 2.

Der Bremssattel 2 kann insgesamt oder partiell im Bereich von Laufflächen der Rampen 17 und im Bereich der Zahnstange 15 gehärtet sein. Im Ausführungsbeispiel ist eine andere Möglichkeit gewählt, die Rampen 17 weisen als separate Teile hergestellte, gehärtete, leistenförmige Laufflächen 23 auf. Wie in Figur 3 dargestellt, können die Laufflächen 23 in eine Nut der Rampen 17 eingebracht oder wie in Figur 4 dargestellt auf die Rampen 17 aufgesetzt sein. Vorzugsweise sind die Laufflächen 23 oder die Wälzkörper 16 ballig zum Ausgleich von Lagetoleranzen, d. h. wenn Drehachsen der Wälzkörper 16 nicht exakt parallel zu Oberflächen der Laufflächen 23 der Rampen 17 sind. Die Querneigung der Laufflächen 23 der Rampen 17 ist in Figuren 3 und 4 gut zu sehen.

Wie die Laufflächen 23 ist auch die Zahnstange 15 im Ausführungsbeispiel ein separates, auf einer Rippe angebrachtes, gehärtetes und verschleißfestes Bauteil (Figur 5).

Auf der der Bremsscheibe 3 zugewandten Innenseite der Platte 5 des Bremssattels 2 sind die mechanischen Teile der Scheibenbremse 1 mit einem Faltenbalg 24 aus Gummi oder Kunststoff umschlossen. Der Faltenbalg 24 ist schlauchförmig mit elliptischem Querschnitt, er erstreckt sich von der Platte 5 bis zur Belagträgerplatte 13, so dass die mechanischen und beweglichen Teile der Scheibenbremse 1 vollständig im Gehäuse 7, dem Faltenbalg 24 und der Belagträgerplatte 13 eingeschlossen und vor Nässe und Verschmutzung geschützt sind. Die Befestigung des Faltenbalgs 24 an der Platte 5 ist in Figur 6 dargestellt. Der Faltenbalg 24 weist einen umlaufenden, nach innen umgeformten Rand 25 auf, der an der Platte 5 anliegt. Ein ellipsenringförmiger, gekröpfter Niederhalter 26, der an der Platte 5 befestigt ist, übergreift den Rand 25 des Faltenbalgs 24 und hält ihn klemmend an der Platte 5. Eine andere Möglichkeit der Befestigung des Faltenbalgs 24 ist an der Belagträgerplatte 3 verwirklicht. Hier umschließt der Faltenbalg 24 die Belagträgerplatte 13 am Umfang und ist zusätzlich durch einen in der Zeichnung nicht sichtbaren Gurt nach Art einer Rohrschelle befestigt. Zur zusätzlichen Sicherung kann der Faltenbalg 24 einen umlaufenden Wulst der Belagträgerplatte 13 übergreifen oder in eine umlaufende Nut der Belagträgerplatte 13 eingreifen und zusätzlich durch einen Gurt gesichert sein (nicht dargestellt). Die Sicherheit gegen Lösen des Faltenbalgs 24 lässt sich dadurch wesentlich erhöhen.

## Patentansprüche

1. Selbstverstärkende elektromechanische Scheibenbremse (1),
mit einem Bremssattel (2) und einem Gehäuse (7),
in dem elektromechanische Teile (8 bis 10) der Scheibenbremse (1) untergebracht sind, wobei der Bremssattel (2) einen Rahmensattel bildet, der zwei parallel zueinander
angeordnete Platten (5, 6) aufweist,
die sich beiderseits einer Bremsscheibe (3) befinden,
die parallel zur Bremsscheibe (3) angeordnet sind und
die an ihren Längsenden durch Stege (4) miteinander verbunden sind,
die quer zur Bremsscheibe (3) verlaufen und
die außerhalb eines Umfangs der Bremsscheibe (3) angeordnet sind,
**dadurch gekennzeichnet,**
**dass** das Gehäuse (7) einstückiger Teil des Bremssattels (2) ist und
**dass** das Gehäuse (7) ein formstabiler Hohlkörper ist, der den Bremssattel (2) gegen Biegung und/oder Torsion versteift.

2. Selbstverstärkende elektromechanische Scheibenbremse nach Anspruch 1, **dadurch gekennzeichnet, dass** die Scheibenbremse (1) eine Selbstverstärkungseinrichtung (16, 17) mit einem Rampenmechanismus aufweist und dass mindestens eine Rampe (17) des Rampenmechanismus einstückig mit dem Gehäuse (7) ist und eine Versteifungsrippe (18) des Gehäuses (7) bildet.

3. Selbstverstärkende elektromechanische Scheibenbremse nach Anspruch 1, **dadurch gekennzeichnet, dass** die Scheibenbremse (1) eine Selbstverstärkungseinrichtung (16, 17) mit einem Rampenmechanismus aufweist und dass mindestens eine Rampe (17) des Rampenmechanismus einen Lagerbock für eine Getriebewelle eines Getriebes der Scheibenbremse (1) bildet.

4. Selbstverstärkende elektromechanische Scheibenbremse nach Anspruch 2, **dadurch gekennzeichnet, dass** eine Rampe (17) gemeinsam mit einer weiteren Rampe (17) und/oder einem Lagerbock eine Versteifungsrippe (18) des Gehäuses (7) bildet.

5. Selbstverstärkende elektromechanische Scheibenbremse nach Anspruch 2, **dadurch gekennzeichnet, dass** Versteifungsrippen (17) des Gehäuses (7) auf Stoß zueinander und/oder zu Gehäusewänden angeordnet sind.

6. Selbstverstärkende elektromechanische Scheibenbremse nach Anspruch 1, **dadurch gekennzeichnet, dass** das Gehäuse (7) ein Urformteil ist.

7. Selbstverstärkende elektromechanische Scheibenbremse nach Anspruch 1, **dadurch gekennzeichnet, dass** die Scheibenbremse (1) eine Selbstverstärkungseinrichtung (16, 17) mit einem Rampenmechanismus aufweist und dass mindestens eine Rampe (17) des Rampenmechanismus eine Lauffläche (23) aufweist, die als eigenes Teil ausgebildet ist.

8. Selbstverstärkende elektromechanische Scheibenbremse nach Anspruch 1, **dadurch gekennzeichnet, dass** die Scheibenbremse (1) eine Zahnstange (15) als Teil eines Getriebes aufweist, die als eigenes Teil ausgebildet und im Gehäuse (7) befestigt ist.

9. Selbstverstärkende elektromechanische Scheibenbremse nach Anspruch 1, **dadurch gekennzeichnet, dass** die Scheibenbremse (1) einen Faltenbalg (24) aufweist, der mit einem Niederhalter (26) am Bremssattel (2) oder am Gehäuse (7) befestigt ist.

10. Selbstverstärkende elektromechanische Scheibenbremse nach Anspruch 1, **dadurch gekennzeichnet, dass** die Scheibenbremse (1) eine Selbstverstärkungseinrichtung (16, 17) mit einem Rampenmechanismus aufweist und dass Wälzkörper (16) und/oder Laufflächen (23) des Rampenmechanismus eine ballige Lauffläche aufweisen.

## Claims

1. Self-reinforcing electromechanical disc brake (1),
with a brake calliper (2) and a housing (7),
in which electromechanical parts (8 to 10) of the disc brake (1) are accommodated,
the brake calliper (2) forming a frame calliper which has two plates (5, 6) arranged parallel to one another,
which are located on both sides of a brake disc (3),
which are arranged parallel to the brake disc (3) and
which are connected to one another at their longitudinal ends by means of webs (4)
which run transversely with respect to the brake disc (3) and
which are arranged outside a circumference of the brake disc (3),
**characterized**
**in that** the housing (7) is a one-piece part of the brake calliper (2), and
**in that** the housing (7) is a dimensionally stable hollow body which stiffens the brake calliper (2) against flexion and/or torsion.

2. Self-reinforcing electromechanical disc brake according to Claim 1,
**characterized in that** the disc brake (1) has a self-reinforcing device (16, 17) with a ramp mechanism, and **in that** at least one ramp (17) of the ramp mechanism is in one piece with the housing (7) and forms a stiffening rib (18) of the housing (7).

3. Self-reinforcing electromechanical disc brake according to Claim 1, **characterized in that** the disc brake (1) has a self-reinforcing device (16, 17) with a ramp mechanism, and **in that** at least one ramp (17) of the ramp mechanism forms a bearing pedestal for a gear shaft of a gear of the disc brake (1).

4. Self-reinforcing electromechanical disc brake according to Claim 2, **characterized in that** a ramp (17) forms, together with a further ramp (17) and/or with a bearing pedestal, a stiffening rib (18) of the housing (7).

5. Self-reinforcing electromechanical disc brake according to Claim 2, **characterized in that** stiffening ribs (17) of the housing (7) are arranged in abutment with one another and/or with housing walls.

6. Self-reinforcing electromechanical disc brake according to Claim 1, **characterized in that** the housing (7) is a primary moulding.

7. Self-reinforcing electromechanical disc brake according to Claim 1, **characterized in that** the disc brake (1) has a self-reinforcing device (16, 17) with a ramp mechanism, and **in that** at least one ramp (17) of the ramp mechanism has a running surface (23) which is formed as a specific part.

8. Self-reinforcing electromechanical disc brake according to Claim 1, **characterized in that** the disc brake (1) has as part of the gear a rack (15) which is formed as a specific part and which is fastened in the housing (7).

9. Self-reinforcing electromechanical disc brake according to Claim 1, **characterized in that** the disc brake (1) has a concertina (24) which is fastened by means of a holding-down device (26) to the brake calliper (2) or to the housing (7).

10. Self-reinforcing electromechanical disc brake according to Claim 1, **characterized in that** the disc brake (1) has a self-reinforcing device (16, 17) with a ramp mechanism, and **in that** rolling bodies (16) and/or running surfaces (23) of the ramp mechanism have a crowned running surface.

## Revendications

1. Frein à disque électromécanique auto-renforçateur (1), comprenant un étrier (2) et un boîtier (7), dans lequel sont montées des pièces électromécaniques (8 à 10) du frein à disque (1), l'étrier (2) formant un étrier cadre qui présente deux plaques (5, 6) disposées parallèlement l'une à l'autre, qui se trouvent de chaque côté d'un disque de frein (3), qui sont disposées parallèlement au disque de frein (3) et qui sont connectées l'une à l'autre à leurs extrémités longitudinales par des flancs (4) qui s'étendent transversalement au disque de frein (3) et qui sont disposés en dehors d'une périphérie du disque de frein (3),
**caractérisé en ce que**
le boîtier (7) est une partie formée d'une seule pièce avec l'étrier (2) et **en ce que** le boîtier (7) est un corps creux de forme stable qui renforce l'étrier (2) vis-à-vis de la flexion et/ou de la torsion.

2. Frein à disque électromécanique auto-renforçateur selon la revendication 1, **caractérisé en ce que** le frein à disque (1) présente un dispositif auto-renforçateur (16, 17) avec un mécanisme de rampe, et **en ce qu'**au moins une rampe (17) du mécanisme de rampe est formée d'une seule pièce avec le boîtier (7) et forme une nervure de renforcement (18) du boîtier (7).

3. Frein à disque électromécanique auto-renforçateur selon la revendication 1, **caractérisé en ce que** le frein à disque (1) présente un dispositif auto-renforçateur (16, 17) avec un mécanisme de rampe, et **en ce qu'**au moins une rampe (17) du mécanisme de rampe forme un coussinet pour un arbre de transmission d'une transmission du frein à disque (1).

4. Frein à disque électromécanique auto-renforçateur selon la revendication 2, **caractérisé en ce qu'**une rampe (17), conjointement avec une autre rampe (17) et/ou un coussinet, forme une nervure de renforcement (18) du boîtier (7).

5. Frein à disque électromécanique auto-renforçateur selon la revendication 2, **caractérisé en ce que** des nervures de renforcement (17) du boîtier (7) sont disposées bout à bout les unes par rapport aux autres ou par rapport à des parois du boîtier.

6. Frein à disque électromécanique auto-renforçateur selon la revendication 1, **caractérisé en ce que** le boîtier (7) est une pièce moulée d'origine.

7. Frein à disque électromécanique auto-renforçateur selon la revendication 1, **caractérisé en ce que** le frein à disque (1) présente un dispositif auto-renforçateur (16, 17) avec un mécanisme de rampe, et **en ce qu'**au moins une rampe (17) du mécanisme de rampe présente une surface de roulement (23) qui est réalisée sous forme de pièce autonome.

8. Frein à disque électromécanique auto-renforçateur selon la revendication 1, **caractérisé en ce que** le frein à disque (1) présente une crémaillère (15) faisant partie d'une transmission, qui est réalisée sous forme de pièce autonome et qui est fixée dans le boîtier (7).

9. Frein à disque électromécanique auto-renforçateur selon la revendication 1, **caractérisé en ce que** le frein à disque (1) présente un soufflet (24) qui est fixé avec un serre-flan (26) sur l'étrier (2) ou sur le boîtier (7).

10. Frein à disque électromécanique auto-renforçateur selon la revendication 1, **caractérisé en ce que** le frein à disque (1) présente un dispositif auto-renforçateur (16, 17) avec un mécanisme de rampe, et en ce des corps de roulement (16) et/ou des surfaces de roulement (23) du mécanisme de rampe présentent une surface de roulement bombée.
